# EUROPEAN PATENT SPECIFICATION

(11) **EP 4 463 286 B1**
(45) Date of publication and mention of the grant of the patent: **28.10.2026**
(21) Application number: 23700664.8
(22) Date of filing: 10.01.2023
(51) Int. Cl.: B24B 3/36, B24B 3/54, B24B 41/06, B23Q 3/06

(54) **A PRECISION GRINDING JIG AND A GRINDING SYSTEM**
EINE PRÄZISIONSSCHLEIFVORRICHTUNG UND EIN SCHLEIFSYSTEM
UN GABARIT DE MEULAGE DE PRÉCISION ET UN SYSTÈME DE MEULAGE

(30) Priority: 14.01.2022 SE 2250020
(43) Date of publication of application: 20.11.2024
(73) Proprietor: Tormek AB, 711 34 Lindesberg (SE)
(72) Inventor: PERSSON, Håkan, 711 31 Lindesberg (SE)
(74) Representative: Ström & Gulliksson AB
(86) International application number: PCT/EP2023/050413
(87) International publication number: WO 2023/135118

(56) References cited:
- JP-A- 2008 260 115
- US-A1- 2020 316 748

## Description

### Technical field

The present disclosure generally pertains grinding of blade tools. More precisely, the present disclosure relates to a grinding jig for high precision grinding of a blade tool and to a grinding system comprising such a grinding jig.

### Background art

Grinding of blade tools, such as knives, which have edges with opposite edge bevels is typically made by clamping the blade tool in a grinding jig and moving the tool across a revolving grinding wheel or grindstone. When the edge bevel on the first side of the tool has been sharpened, the grinding jig is turned over and moved in opposite direction across the grindstone so that edge bevel on the second side of the blade tool is sharpened.

The prior art document EP0214943B1 discloses a grinding jig having a first clamping plate, a second clamping plate and a shaft fixedly secured to the first clamping plate. The second clamping plate is movable with respect to the first clamping plate to clamp a knife blade between the fixed clamping plate and the movable clamping plate. A handle with a radially extending stop is attached to the shaft. The stop may during grinding rest against a support of a grinding machine to obtain an exact grinding angle.

While proven reliable in grinding operations, the grinding jig of EP0214943B1 has the drawback in that the blade is not centered in the grinding jig. This has the effect that the angle between the blade and the grinding stone changes when the grinding jig (after completed grinding the first edge bevel) is turned over to grind the second edge bevel of the blade. The deviation of the edge bevel angles increases with increasing blade thickness.

The prior art document EP3722047B1 discloses a grinding jig having a first and a second separate grinding jig half which respectively comprises a clamp half and an elongate support portion half. The first and second grinding jig halves may be releasably forced towards each other to hold a blade between the first and second clamp halves. The grinding jig further comprises front and rear abutments arranged spaced apart from each other on the support portion halves for abutment against a support of a grinding machine. The two separate grinding jig halves of EP3722047B1 ensure that the blade is centered in the grinding jig. The first and second clamp halves and the first and second support portion halves are on the same distance from the center of blade. However, the solution with two separate grinding jig halves has the disadvantage that the distance from the first and second support portions to the center of blade will depend on the blade thickness.

US 2020/316748 A1 discloses a grinding jig comprising a first and second clamp half, and an elongate support portion for supporting the jig on a support bar.

In order to achieve high precision grinding of a blade tool, the design of grinding jigs can be yet further optimised.

### Summary of the invention

It is in view of the above considerations and others that the embodiments of the present invention have been made. The present disclosure recognizes the fact that grinding jigs for blade tools may be improved such that the grinding angle is not affected by the width of the clamped blade, and such that the grinding angle remains the same for the grinding of both sides of the blade. Thereby, high precision grinding may be achieved.

It is an object of the present disclosure to provide a grinding jig for blade that solves or mitigates at least one of the problems of the prior art. In addition, an object is to provide a grinding jig that is sturdy and easy to handle.

According to the present invention, at least one of the above-mentioned objects is met by a grinding jig as defined in the independent claim 1.

Preferred embodiments are defined in the dependent claims.

In more detail, the radial distance between the first and second support legs is constant where the grinding jig is supported onto the support means of the grinding machine. In other words, the radial thickness of the elongate support portion is constant at its axial position where the elongate support portion is supported onto the support means during normal use. During normal use the radial abutment surface is supported against the support means. At the radial abutment surface, the distance between the first and second support legs is not affected by the clamp portions being moved with respect to one another, i.e. selectively separated or brought together to clamp or release the blade.

Since the first and second support legs of the support portion are fixed to one another at the radial abutment surface, the blade thickness does not affect the grinding angle. In addition, the grinding jig facilitates the grinding angle remaining the same for the grinding of both sides of the blade. The fixed first and second support legs further result in a grinding jig that is sturdy and easy to handle.

Apart from where the first and second support legs are fixed to one another, the first and second support legs extend separate from each other. The first and second support legs extend separate from each other from the radial abutment surface to the first and second clamp portions, respectively. Apart from where the first and second support legs are fixed to one another, the first and second support legs may be separated by a gap. The first and second clamp portions may be separated by a gap.

The above-describe grinding jig may easily be designed such that the blade is held centrally in the grinding jig. By centrally is meant that the distance from the blade to the first support leg is the same as the distance from the blade to the second support leg. The distance between the first or second support legs and the blade is measured across the grinding jig, i.e. transverse its longitudinal center axis Y.

The grinding jig essentially has the shape of a pair of tweezers. A first lever of the imaginary pair of tweezers corresponds to the first support leg and the first clamp portion. A second lever of the imaginary pair of tweezers corresponds to the second support leg and the second clamp portion. The radial abutment surface may be positioned where the two levers are fixed to one another, i.e. at the fulcrum of the imaginary pair of tweezers.

The support portion may essentially have the shape of a pair of tweezers. A first lever of the imaginary pair of tweezers corresponds to the first support leg. A second lever of the imaginary pair of tweezers corresponds to the second support leg. The radial abutment surface may be positioned where the two levers are fixed to one another, i.e. at the fulcrum of the imaginary pair of tweezers.

The length of the first support leg and the first clamp portion may correspond to at least 70 percent of the length of the grinding jig. The length of the second support leg and the second clamp portion may correspond to at least 70 percent of the length of the grinding jig. Such a grinding jig is easily adapted to blades various shapes and thicknesses. In addition, the first and second support legs may easily be bent to move the first and second clamp portions with respect to one another

The first and second support legs may be resiliently movable with respect to the longitudinal center axis Y to selectively clamp or release the blade. The grinding jig may be configured such that the blade is centered in the grinding jig regardless of the blade thickness.

The first and second support legs may be configured to be bent apart or towards one another such that first and second clamp portions are movable with respect to one another to selectively clamp or release the blade. Thereby, the first and second support legs may be fixed to one another at the radial abutment surface. Thus, the first and second support legs are fixed to one another at the radial abutment surface and the first and second support legs may be bent to selectively clamp or release the blade. In other words, the first and second support legs are fixed to one another at one end of the first and second support legs and free from one another at the opposite end.

The first and second support legs are fixed to one another and a transition between the first and second support legs may be rounded to reduce stress concentrations resulting from the first and second support legs being moved (bent) towards or away from one another. A transition from the first support leg to the radial abutment surface and from the second support leg to the radial abutment surface may be rounded. Such a transition may be referred to as an outer transition. An inner transition, i.e. a transition between the first and second support legs may also be rounded.

The above-described outer transition may have a shape that is adapted to the cross-section of the support means. The support means may be of circular cross-section and the outer transition may be rounded to fit circular cross-section of the support means. The above-described inner transition may be of an essentially cylindrical shape.

The first support leg may extend from the radial abutment surface to the first clamp portion. The second support leg may extend from the radial abutment surface to the second clamp portion. The first and second support legs may extend in parallel with one another.

The length of the clamp portions along the longitudinal center axis may be essentially the same as the length of the support legs along the longitudinal center axis.

The first and second support legs may have the same flexural stiffness. Subjecting the first and second support legs to the same clamping force may then bend the first and second support to the same extent, such that the blade is centered in the grinding jig. Thus, the blade thickness will not affect the grinding angle.

The first and second support legs may be resilient or may comprise resilient sections such that first and second clamp portions are movable with respect to one another. The resilient sections of the first and second support legs may be of identical cross-sections. The first and second support legs may be bent at the resilient sections. Alternatively, the entire first and second support legs may be configured to be bent.

The resilient sections of the first and second support legs may be of essentially semi-circular cross sections.

The first and second support legs may be solid or may comprise resilient sections that are solid. A solid support leg or support leg section may be more suitable to be bent as compared to e.g. hollow section. The solid, resilient sections may be of semi-circular cross sections.

The support legs may be integral, i.e. formed in one piece. In this way, the first and second support legs may be fixed to one another at the radial abutment surface. The support legs may be formed in one piece by moulding, 3D printing or casting.

The support legs may be made from plastic material, such as fiber reinforced plastic material. The elongate support portion may be made from plastic material, such as fiber reinforced plastic material. A suitable material for the support legs, or elongate support portion, is polypropylene reinforced by glass fibers. Plastic material may be light-weight, easy to manufacture and resilient.

The clamp portions may be non-resilient. Such clamp portions may securely clamp the blade, and may be resistant to wear. The clamp portions may for example be made from metal such as zinc. The clamp portions may be referred to as clamp parts or clamp plates.

The grinding may comprise actuating means arranged to releasably force the first and second clamp portions towards one another to clamp the blade. The actuating means may engage the clamp portions. The actuating means may be coupled to the clamp portions. The clamp portions may thus comprise actuating interfaces for the actuating means.

The actuating means may comprise a joining actuator and, optionally, a separating actuator.

The separating actuator may be positioned between the joining actuator and the first and second support legs of the support portion. Thereby, the separating actuator may act to increase the clamping force between the first and second clamp portions.

The joining actuator and the separating actuator may provide a grinding jig that is able to securely clamp blades of various shapes and thicknesses. Blades, such as knife blades, may have parallel opposing side surfaces or tapered opposing side surfaces.

The elongate support portion may comprise a rear radial abutment surface and a front radial abutment surface. The radial abutment surfaces may be spaced apart such that the grinding jig may be moved back and forth relative the support means in the direction of the longitudinal center axis Y of the grinding jig. The front radial abutment surface is optimal.

The rear radial abutment surface may be formed in one piece, it may for example be formed of a disc, e.g. a circular disc. A first surface of the disc may form the rear radial abutment surface. A second surface of the disc opposite the first surface may form the rear end of the grinding jig. Alternatively, a handle portion may extend axially from the second surface and form the rear end of the grinding jig.

The first and second support legs may each comprise a respective front radial abutment surface. The front radial abutment surface of the first support leg may be positioned at the same position along the longitudinal center axis Y as the front radial abutment surface of the second support leg.

The support portion may essentially have the shape of a pair of tweezers where a first lever of the imaginary pair of tweezers corresponds to the first support leg and a second lever of the imaginary pair of tweezers corresponds to the second support leg. The rear radial abutment surface may be positioned where the two levers are fixed to one another, i.e. at the fulcrum of the imaginary pair of tweezers, and the front radial abutment surfaces may be positioned on the respective support lever and thus spaced apart from the rear radial abutment surface in the direction of the longitudinal center axis Y of the grinding jig.

The first clamp portion may be configured to be attached to the first support leg and the second clamp portion may be configured to be attached to the second support leg. The first clamp portion and the first support leg may be shaped to allow a secure and stable attachment there between. The second clamp portion and the second support leg may be shaped to allow a secure and stable attachment there between.

The first and second support legs may be at least essentially mirror symmetric with respect to a center plane P of the grinding jig. Apart from actuator interfaces for the actuating means, first and second support legs may be mirror symmetric with respect to the center plane P.

The first and second clamp portions may be at least essentially mirror symmetric with respect to the center plane P of the grinding jig. Apart from actuator interfaces for the actuating means and any guiding means, the first and second clamp portions may be mirror symmetric with respect to the center plane P.

The elongate support portion may be a separate part. The first clamp portion, the second clamp portion and the elongate support portion may be separate parts. In this way, different materials may be used for the elongate support portion and for the clamp portions. The elongate support portion may thus be referred to as an elongate support part. The clamp portions may be referred to as clamp parts. The elongate support part may be made from plastic material, such as fiber reinforced plastic material. The clamp parts may be made from metal such as zinc.

Thus, at least one of the above-mentioned objects may be met by a grinding jig for holding a blade of a tool in a grinding machine that comprises a grinding means and a support means. The grinding jig may comprise a first and a second clamp part that are movable with respect to one another to clamp the blade. The grinding jig may further comprise an elongate support part for supporting the grinding jig onto the support means of the grinding machine, the elongate support part may comprise a first support leg carrying the first clamp part and a second support leg carrying the second clamp part. The elongate support part may extend along a longitudinal center axis Y of the grinding jig and comprise a radial abutment surface for abutment against the support means of the grinding machine. The first and second support legs of the support part may be fixed to one another at the radial abutment surface.

According to a second aspect of the present disclosure, at least one of the above-mentioned objects is met by a grinding system comprising a grinding machine having a grinding means and a support means, the grinding system being configured for cooperation with a grinding jig as described above. The grinding system thus comprises the grinding jig. At least one of the above-mentioned objects may also met by a grinding machine comprising a grinding means, a support means and a grinding jig as described above.

Further alternatives and advantages are disclosed in the appended claims and the following description.

### Brief description of the drawings

These and other aspects, features and advantages will be apparent and elucidated from the following description of various embodiments, reference being made to the accompanying drawings, in which:
- figure 1: is an isometric view of a grinding jig,
- figure 2: shows the grinding jig of figure 1 when used in a grinding machine with a grinding means and a support means supporting the grinding jig,
- figure 3: is an exploded view of the grinding jig of figure 1,
- figure 4: is a side view of the grinding jig of figure 1, and
- figure 5: is a side view of a grinding jig according to an alternative embodiment.

### Detailed description of embodiments

The grinding jig 1 and the grinding machine 200 according to the present disclosure will now be described more fully hereinafter. The jig 1 and machine 200 according to the present disclosure may however be embodied in many different forms and should not be construed as limited to the embodiments set forth herein. Rather, these embodiments are provided by way of example so that this disclosure will be thorough and complete, and will fully convey the scope of the present disclosure to those persons skilled in the art. Same reference numbers refer to same elements throughout the description.

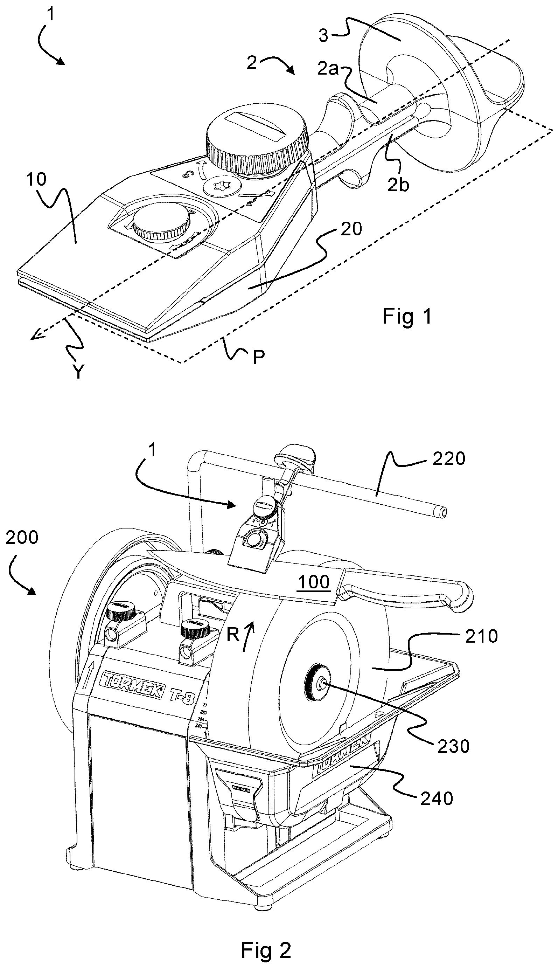

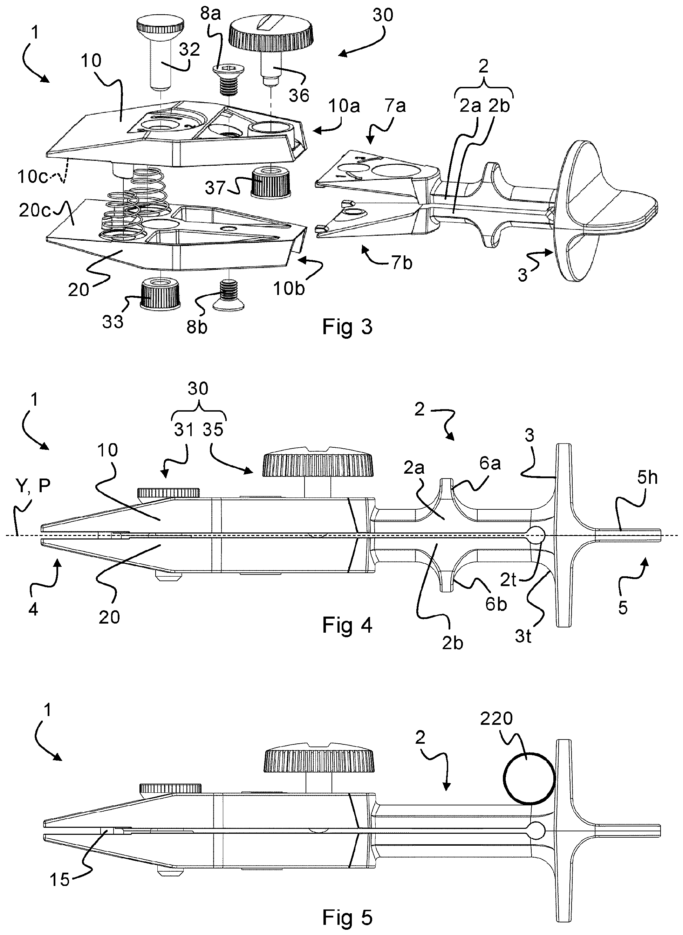

Figures 1, 3 and 4 shows a main embodiment of the grinding jig in detail. Figure 5 shows an alternative grinding jig that differs from the one of the main embodiment in that the front radial abutment surfaces 6a, 6b (reference numerals indicated in figure 3) are omitted, as will be described below.

Figure 2 shows a grinding machine 200 comprising a grinding jig 1 according to the present disclosure. A blade tool in the form of a knife with a blade 100 to be ground is clamped in the grinding jig 1. The grinding machine 200 is of the bench type, i.e. it is of a design that allows it to be placed on a table in e.g. a workshop or a kitchen and to be operated manually by a person. The grinding machine 200 has a housing and comprises a grinding means 210 in the form of a cylindrical grindstone or a cylindrical grinding wheel having a cylindrical grinding surface. The grinding wheel 210 is rotated in a rotation direction R by a motor (not shown) which may be connected to a grinding shaft 230 running through the center of the grinding wheel 210. The motor may for example be an electrical motor.

A trough 240 for grinding liquid, such as water or oil, may be arranged underneath the grinding wheel 210. The grinding machine 200 further comprises a support means 220 in the form of a support bar, for supporting the grinding jig 1. The support bar 220 extends over the grinding surface in parallel with the shaft 230 and thus in parallel with the rotation axis of the cylindrical grinding wheel 210, i.e. transverse the rotation direction R of the grinding wheel 210.

The grinding machine 200 may be any type of conventional grinding machine, provided with a support means 220, for grinding blade tools such as knives. Such a knife may have a handle and a blade 100 with a back and a symmetric edge with two opposing edge bevels. Edge bevels may also be denominated grind bevels. The grinding machine may be a Tormek T-8 which is commercially available from the company Tormek AB.

The support bar 220 may be such that the grinding angle between the blade 100 and the grinding wheel 210 may be set. The support bar 220 may for example be adjustable in height.

As is shown in figure 2, the grinding shaft 230 extends out from one side of the grinding machine 200. The grinding wheel 210 is carried by the grinding shaft 230 and is located at one side of the grinding machine 200. The cylindrical grinding wheel 210 comprises a peripheral grinding surface against which the blade 100 is grinded.

In a grinding operation, as schematically indicated in figure 2, the grinding jig 1 together with the clamped blade 100 are first moved in a first direction (left) across the grinding wheel 210 to grind a first side edge bevel of the blade 100. Then, the grinding jig 1 together with the blade is turned around where after the blade 100 is moved in a second direction (right) across the grinding wheel 210. The grinding machine 200 and the grinding jig 1 are configured such that the blade 100 is held transverse the rotation direction R of the grinding wheel 210, such that the blade 100 is grinded transverse its longitudinal direction. A similar operation is described in EP3722047B1.

Turning to figure 1, the grinding jig 1 comprises a first clamp portion 10 and a second clamp portion 20. The grinding jig 1 is configured such that the blade 100, e.g. a knife blade, may be clamped by the first and second clamp portions 10, 20. In other words, the first and second clamp portions 10, 20 are selectively movable with respect to one another to clamp or release the blade 100. The grinding jig 1 further comprises an elongate, in the present disclosure essentially rod-shaped, support portion 2 by means of which the grinding jig 1 may be supported onto the support bar 220 as is shown in figure 2. The support portion 2 extends along a longitudinal center axis Y (indicated in figures 1 and 4) of the grinding jig 1 and comprises a radial abutment surface 3 for abutment against the support bar 220. The radial abutment surface 3 has the same function as the radially extending stop of EP0214943B1 and the rear abutments of EP3722047B1.

The support portion 2 comprises a first support leg 2a and a second support leg 2b that extend in parallel next to one another from the radial abutment surface 3 to the first and second clamp portions 10, 20, respectively. As is illustrated, the first support leg 2a carries the first clamp portion 10. In the present examples, the first clamp portion 10 is attached to the first support leg 2a. With particular reference to figure 3, the first support leg 2a and the first clamp portion 10 comprise mutually adapted interfaces 7a, 10a such they may be rigidly attached to one another. In the present examples, the first clamp portion 10 is attached to the first support leg 2a by means of a screw connection. More precisely, a screw (countersunk bolt) 8a passes through the first support leg 2a into a threaded hole in the first clamp portion 10.

Similarly, the second support leg 2b carries the second clamp portion 20. In the present examples, the second clamp portion 20 is attached to the second support leg 2b. The second support leg 2b and the second clamp portion 20 comprise mutually adapted interfaces 7b, 10b such they may be rigidly attached to one another. In the present examples, the second clamp portion 20 is attached to the second support leg 2b by means of a screw connection. A screw (countersunk bolt) 8b passes through the second support leg 2b into a threaded hole in the second clamp portion 20.

In other embodiments (not shown) the first support leg 2a may carry the first clamp portion 10 by the first support leg 2a and the first clamp portion 10 being formed in one piece. Similarly, the second support leg 2b may carry the second clamp portion 20 by the second support leg 2b and the second clamp portion 20 being formed in one piece.

The first and second support legs 2a, 2b of the support portion 2 are fixed to one another at least at the radial abutment surface 3. In the present embodiments, the first and second support legs 2a, 2b are integral, i.e. formed in one piece. In other embodiments (not shown), the first and second support legs 2a, 2b may be attached to one another, e.g. glued or screwed to one another at least at the radial abutment surface 3.

Since the first and second support legs 2a, 2b are fixed to one another at the radial abutment surface 3, the radial extension of the support portion 2 is fixed at the radial abutment surface 3. In other words, the thickness of the support portion 2 is constant at the radial abutment surface 3 when the first and second clamp portions 10, 20 are moved towards or away from one another.

The distal or front ends of the clamp portions 10, 20 may be referred to as the clamp end 4 of the grinding jig 1, i.e. the left end in figures 1 and 3 to 5. The proximal or rear ends of the clamp portions 10, 20 are in the present examples attached to the support portion 2. The end of the grinding jig 1 that is opposite to the clamp end 4 of the grinding jig 1 may be referred to as the rear end 5 of the grinding jig 1, i.e. the right end in figures 1 and 3 to 5. The reference numerals of the clamp end 4 and the rear end 5 are indicated in figure 3. Thus, the grinding jig 1 extends from a clamp end 4 to a rear end 5.

In the present embodiments, the distance from the clamp end 4 to the (rear) radial abutment surface 3 is approximately 80 percent of the length of the grinding jig 1. In other words, the length of the first support leg 2a together with the first clamp portion 10 corresponds to approximately 80 percent of the length of the grinding jig 1. The length of the second support leg 2b together with the second clamp portion 20 corresponds to approximately 80 percent of the length of the grinding jig 1. For ease of use and adaptability to various blade 100 shapes, this ratio may be at least 70 percent.

The first support leg 2a and the first clamp portion 10, and the second support leg 2b and the second clamp portion 20, respectively, may be configured to be attached to one another. The respective support leg 2a, 2b and clamp portion 10, 20 may be configured to be attached in a form fit manner. For attachment there between, the respective support leg 2a, 2b and clamp portion 10, 20 may comprise mutually complementing shapes. In other words, the first support leg 2a may be configured for a mating connection with the first clamp portion 10. The second support leg 2b may be configured for a mating connection with the second clamp portion 20.

The proximal ends of the clamp portions 10, 20 may comprise attachment interfaces 10a, 10b of a shape that fits corresponding attachment interfaces 7a, 7b formed on or by the free end portions of the support legs 2a, 2b. The attachment interfaces 10a, 10b, 7a, 7b make possible a form fit (also referred to as a positive fit) between the clamp portions 10, 20 and the support legs 2a, 2b, respectively.

Referring in particular to figure 3, the first clamp portion 10 comprises a socket attachment interface 10a that is configured to receive a plug attachment interface 7a of the first support leg 2a. Similarly, the second clamp portion 20 comprises a socket attachment interface 10b that is configured to receive a plug attachment interface 7b of the second support leg 2b. When a plug attachment interface 7a, 7b is received by a corresponding socket attachment interface 10a,10b in-plane P movement of the respective support leg 2a, 2b with respect the corresponding clamp portion 10, 20 is hindered. A snap-fit lock (not shown) or a screw connection (countersunk bolts 8a, 8b) as in the present examples may secure the plug and socket attachment interfaces 7a, 7b, 10a, 10b.

Thus, in the present embodiments the free end portion of the first support leg 2a forms the plug attachment interface 7a of the first support leg 2a. Said attachment interface 7a has the form of a trapezoid, as seen in a plan view (see figure 1 or 3). The longer one of the parallel sides of the trapezoid forms the end face of the first support leg 2a. As seen in a side view, the trapezoid tapers towards the end face. The inner face of the plug attachment interface 7a (lower face in figures 1 and 3) may comprise protuberances (two shown in figure 3) which are received in corresponding recesses of the socket attachment interface 10a. The plug and socket attachment interfaces of the second support leg 2b and second clamp portion 20 are in the present embodiments mirror symmetric (with respect to the center plane P) to the attachment interfaces of the first support leg 2a and first clamp portion 10.

As is shown, the rear end 5 of the grinding jig 1 may comprise or be composed of a handle portion 5h (reference numeral indicated in figure 4). It is however to be apprehended that it is the distance from the clamp end 4 (or more precisely from the edge of the blade 100) to the radial abutment surface 3 that is of importance to the grinding angle, see figure 2.

The shape of the grinding jig 1 may generally be described as the one of a pair of tweezers. A pair of tweezers generally comprise a first lever and second lever connected at a fulcrum. The levers of the pair of tweezers may be referred to as arms. The first clamp portion 10 together with the first support leg 2a then correspond to the first lever of the imaginary pair of tweezers. The second clamp portion 20 together with the second support leg 2b correspond to the second lever of the imaginary pair of tweezers. In other words, the first clamp portion 10 together with the first support leg 2a form a first half of an imaginary pair of tweezers and the second clamp portion 20 together with the second support leg 2b form the second half of the imaginary pair of tweezers. Referring e.g. to figure 4 or 5, the radial abutment surface 3 is positioned where the levers meet, e.g. at the fulcrum of the imaginary pair of tweezers.

Similarly, the shape of the support portion 2 may generally be described as the one of a pair of tweezers. The first support leg 2a then corresponds to the first lever of the imaginary pair of tweezers and the second support leg 2b corresponds to the second lever of the imaginary pair of tweezers. Referring e.g. to figure 4 or 5, the radial abutment surface 3 is positioned where the levers (support legs 2a, 2b) meet, e.g. at the fulcrum of the imaginary pair of tweezers.

Turning in particular to figures 4 and 5, at least a portion of the radial abutment surface 3 extends perpendicular from the support portion 2 and around its circumferential. In the present embodiments, the radial abutment surface 3 is formed of a disc. The disc may have a flat side surface that forms the radial abutment surface 3, as is shown in EP3722047B1.

However, as is most apparent in figures 4 and 5, the transition 3t from the first support leg 2a to the radial abutment surface 3 may be rounded. Similarly, the transition 3t from the second support leg 2b to the radial abutment surface 3 may be rounded. Such rounded transitions, which may be denoted outer transitions 3t, may avoid or reduce stress concentrations when the first and second support legs are separated from one another, i.e. bent away from one another. Stress concentrations may also be avoided or reduced by a rounded inner transition 2t between the first and second support legs 2a, 2b. The inner transition 2t is essentially of a cylindrical shape.

In the present embodiments, the support bar 220 is of a circular cross-section, see figures 2 and 5. The above-mentioned outer rounded transition 3t may have a shape that fits the support bar 220. As is shown particularly in figure 5, the outer rounded transition 3t may have a radius of curvature that corresponds to the radius of the support bar 220.

The support portion 2 provides a respective axial support surface at the first and second support legs 2a, 2b. In normal use, the support bar 220 is supported both axially and radially against the support portion 2.

The first and second clamp portions 10, 20 are movable with respect to one another at the clamp end 4 such that the blade 100 may be releasably clamped there between 2. However, the first and second support legs 2a, 2b are fixed to one another at the radial abutment surface 3. Thus, even if the first and second clamp portions 10, 20 are movable with respect to one another at the clamp end 4, the first and second support legs 2a, 2b remain at the same distance from one another at the radial abutment surface 3.

Prior art grinding jigs, such as the ones known from EP0214943B1 and EP3722047B1, typically do not clamp a tool by the grinding jigs being bent. The first and second support legs 2a, 2b of the present disclosure may however be configured to be bent such that first and clamp portions 10, 20 are movable with respect to one another at the clamp end 4.

The section of the support portion 2 that is bent when the clamp portions 10, 20 are selectively separated or brought together to clamp or release the blade 100 may have an essentially circular cross-section. Thus, the first and second support legs 2a, 2b may at the section that is intended to be bent have essentially semi-circular cross-sections, see in particular figures 1 and 3.

The first and second clamp portions 10, 20 comprise respectively a contact surface 10c, 20c for engaging a portion of the blade 100 when it is clamped. The contact surfaces 10c, 20c may be slightly concave such that the blade 100 is clamped between the lateral sides of the first and second clamp parts 10, 20. The first and second contact surfaces 10c, 20c are equidistant from the center plane P or center axis Y of the grinding jig 1.

The support portion 2 may alternatively be referred to as a shaft. The clamp portions 10, 10 may alternatively be referred to as clamp plates.

The support portion 2 may be made of plastic material, preferably fiber reinforced plastic material. The clamp portions 10, 20 may be made of metal, a preferred metal being zinc. The support portion 2 may in other embodiments be made of a resilient metal. When the support portion 2, as disclosed, is separate from the clamp portions 10 20, these portions may be referred to as parts. Thus, the grinding jig 1 may comprise an elongate support part 2, a first clamp part 10 and a second clamp part 20.

As is shown in figures 1 to 4, the grinding jig 1 may comprise front and rear radial abutments 3, 6a, 6b such that the grinding jig 1 may be moved back and forth the grinding means 210 across the support bar 220. Such a movement may generate a convex (knife) blade edge. Such a movement, especially a slower movement, may also generate a substantially straight blade edge. If the grinding jig 1 is not moved back and forth during grinding, a concave blade edge (of the same radius as the grinding wheel) may be generated. How similar abutments limit the movement of a grinding jig is described in EP3722047B1.

Referring to figure 3, the grinding jig 1 may comprise actuating means 30 to releasably force the first and second clamp portions 10, 20 towards one another to clamp the blade 100. Such actuating means may however be omitted and instead a separate clamp be used. E.g. a clamp that forms part of a grinding machine.

In the present embodiments, the actuating means 30 comprises a joining actuator 31 that is adapted to force the clamp portions 10, 20 towards one another by means of a joining screw connection. Further, the actuating means 30 comprises a separating actuator 35 that is adapted to force the clamp portions 10, 20 away from one another by means of a separating screw connection. As is illustrated, the separating actuator 35 is positioned between the joining actuator 31 and the radial abutment surface 3 where the first and second support legs 2a, 2b are fixed to one another. The clamp portions 10, 20 may comprise actuator interfaces for the joining actuator 31 and for the separating actuator 35.

In more detail, as is shown in figure 3 the joining actuator 31 may comprise a joining screw or bolt 32 and a joining nut 33. The shank of the joining bolt 32 may extend through the first clamp portion 10 and the head of the joining bolt 32 may rest against the first clamp portion 10. The joining nut 33 may be fixedly received in the second clamp portion 20 such that the clamp portions 10, 20 may be forced towards one another by a user turning the joining bolt 32. The joining bolt 32 and the joining nut 33 may be formed from another material than the clamp portions 10, 20, i.e. a material that is suitable for screw connections. In other embodiments (not shown), threads for the joining bolt 32 may be formed integrally in the second clamp portion 20 such that the joining nut 33 may be omitted.

The separating actuator 35 may comprise a separating screw or bolt 36 and a separating nut 37. The shank of the separating bolt 36 may extend through the first clamp portion 10 and abut against the second clamp portion 20. The separating nut 37 may be fixedly received in the first clamp portion 10 such that the clamp portions 10, 20 may be forced away from one another by a user turning the separating bolt 36. The separating bolt 36 and the separating nut 37 may be formed from another material than the clamp portions 10, 20, i.e. a material that is suitable for screw connections. In other embodiments (not shown), threads for the separating bolt 36 may be formed integrally in the first clamp portion 10 such that the separating nut 37 may be omitted.

The joining actuator 31 may in a fist clamping step be tightened such that the blade 100 is held between the clamp portions 10, 20. In a second step, the separating actuator 35 may be tightened to more firmly clamp the blade 100 through lever action. The separate joining actuator 31 and separating actuator 25 may also improve the ability of the grinding jig 1 to securely clamp blades 100 of various shapes and thicknesses.

It is to be apprehended that since the first and second support legs 2a, 2b are fixed to one another at radial abutment surface 3, the actuating means 30 may in other embodiments (not shown) only comprise the joining actuator 31, i.e. the separating actuator 35 is optional. If the separating actuator 35 is omitted, the head of the joining bolt 32 may be enlarged as compared to the disclosed embodiment, such that a user may apply a sufficient torque to securely clamp the blade 100 without the use of a tool.

Figure 3 further shows a pair of helical compression springs that act to resiliently force the clamp portions 10, 20 (and thus the first and second support legs 2a, 2b) apart. The springs are held in place by a respective spring protrusion on the first clamp portions 10. The second clamp portions 20 comprises openings that receive the spring protrusion. The spring protrusions and corresponding openings may act as guiding means that guide the movement of the first and second clamp portions 10, 20 towards one another.

As is indicated in figure 5 (and also visible in figure 4) guiding means in the form of guide pins 15 may protrude from the first or second clamp portion 10, 20 and be received in guide pin openings in the other one of the second clamp portions 10, 20. Such guide pins 15 may guide the movement of the first and second clamp portions 10, 20 towards one another. In addition, two such guide pins 15 arranged at a distance from one another may assist in aligning the blade 100 perpendicular to the center axis Y of the grinding jig 1. The two guide pins 15 may be aligned along a line that is perpendicular to the center axis Y of the grinding jig 1.

It is to be apprehended that since the first and second support legs 2a, 2b are fixed to one another at radial abutment surface 3, the first and second support legs 2a, 2b may be resiliently forced apart and the helical compression springs may be omitted. For example, the first and second support legs 2a, 2b may be resilient or comprise resilient sections and may thereby be biased apart. The first and second support legs 2a, 2b may from manufacture be bent or curved away from one another.

As is clear from the above, especially in conjunction with the accompanying drawings, the grinding jig 1 is configured such that the contact surfaces 10c, 20c are equidistant from the center plane P or center axis Y of the grinding jig 1 when the blade 100 is clamped between the contact surfaces 10, 20c. The grinding jig 1 may now be supported against the support bar 220 that is set at a desirable height dependent on the desired grinding angle. The selected height of the support bar 220 together distance from radial abutment surface 3 to the edge of the blade 100 dictate the grinding angle. The fact that the first and second support legs 2a, 2b are fixed to one another at the radial abutment surface 3 ensures that the grinding angle remains the same when the grinding jig 1 and the blade 100 are turned over.

Another advantage of the first and second support legs 2a, 2b being fixed to one another at the radial abutment surface 3 is that the height of the support bar 220 need not be adjusted when a blade 100 is exchanged for a blade of greater or smaller thickness. In other words, the thickness of the blade 100 does not affect how the support bar 220 is to be positioned in relation to the grinding wheel 210 to obtain a desired grinding angle. The support bar 220 may e.g. be positioned using a computer program such as an app for a mobile phone without the thickness of the blade 100 being a required parameter.

The grinding jig of the present disclosure has a total length of approximately 140 mm, a typical range being 100 to 200 mm. The distance from the clamp end 4 to the rear radial abutment surface 3 is approximately 120 mm, a typical range being 80 to 180 mm. The distance between rear radial abutment 3 and the front abutments 6a, 6b is approximately 20 mm, a typical range being 15 to 30 mm. The width of the clamp portions 10, 20 is 45 mm, a typical range being 30 to 60 mm.

For example, the first clamp part 10 and the first support leg 2a may be formed in one piece. Similarly, the second clamp part 20 and the second support leg 2b may be formed in one piece. In one embodiment, the first clamp part 10, the first support leg 2a, the second support leg 2b and the second clamp part 20 are all formed in one piece, i.e. integral.

Furthermore, although specific terms may be employed herein, they are used in a generic and descriptive sense only and not for purposes of limitation. Therefore, a person skilled in the art would recognize numerous variations to the described embodiments that would still fall within the scope of the appended claims. As used herein, the terms "comprise/comprises" or "include/includes" do not exclude the presence of other elements or steps. Furthermore, although individual features may be included in different claims (or embodiments), these may possibly advantageously be combined, and the inclusion of different claims (or embodiments) does not imply that a certain combination of features is not feasible and/or advantageous. In addition, singular references do not exclude a plurality. Finally, reference signs in the claims are provided merely as a clarifying example and should not be construed as limiting the scope of the claims in any way.

## Claims

1. A grinding jig (1) for holding a blade (100) of a tool in a grinding machine (200), the grinding machine (200) comprising grinding means (210) and support means (220), wherein the grinding jig (1) comprises:
- a first and a second clamp portion (10, 20) that are movable with respect to one another to clamp the blade (100), and
- an elongate support portion (2) configured for supporting the grinding jig (1) onto the support means (220) of the grinding machine (200), the elongate support portion (2) comprising a first support leg (2a) carrying the first clamp portion (10) and a second support leg (2b) carrying the second clamp portion (20), wherein
the elongate support portion (2) extends along a longitudinal center axis Y of the grinding jig (1) and comprises a radial abutment surface (3) configured for abutment against the support means (220) of the grinding machine (200),
**characterised in that**
the first and second support legs (2a, 2b) of the support portion (2) are fixed to one another at the radial abutment surface (3) and the grinding jig (1) essentially having the shape of a pair of tweezers, wherein the first support leg (2a) carrying the first clamp portion (10) forms a first lever of the grinding jig having the shape of the pair of tweezers and the second support leg (2b) carrying the second clamp portion (20) forms a second lever of the grinding jig having the shape of a pair of tweezers.

2. The grinding jig (1) of claim 1, wherein the first and second support legs (2a, 2b) are configured to be bent such that first and second clamp portions (10, 20) are movable with respect to one another.

3. The grinding jig (1) of claim 1 or 2, wherein the radial abutment surface (3) is positioned at the fulcrum of the grinding jig having the shape of a pair of tweezers.

4. The grinding jig (1) according to any of the preceding claims, wherein the first and second support legs (2a, 2b) are solid or comprise resilient sections that are solid.

5. The grinding jig (1) according to any of the preceding claims, wherein the first and second support legs (2a, 2b) are integral or are attached to one another, e.g., by being glued or screwed to one another at least at the radial abutment surface (3).

6. The grinding jig (1) according to any of the preceding claims, wherein the first and second support legs (2a, 2b) are made from plastic material.

7. The grinding jig (1) according to any of the preceding claims wherein the clamp portions (10, 20) are made from metal.

8. The grinding jig (1) according to any of the preceding claims, comprising actuating means (30) arranged to releasably force the first and second clamp portions (10, 20) towards one another to clamp the blade (100).

9. The grinding jig (1) of claim 8, wherein the actuating means (30) are configured to engage the first and second clamp portions (10, 20).

10. The grinding jig (1) of claim 8 or 9, wherein the actuating means (30) comprise a joining actuator (31) and, optionally, a separating actuator (35).

11. The grinding jig (1) of claim 8 or 9, wherein the actuating means (30) comprise a joining actuator (31) and a separating actuator (35) and wherein the separating actuator (35) is positioned between the joining actuator (31) and the first and second support legs (2a, 2b).

12. The grinding jig (1) according to any of the preceding claims, wherein the elongate support portion (2) comprises a rear radial abutment surface (3) and a front radial abutment surface (6a, 6b), wherein the rear and front radial abutment surfaces (3, 6a, 6b) are spaced apart such that the grinding jig (1) is movable back and forth relative the support means (220) in the direction of the longitudinal center axis Y of the grinding jig (1).

13. The grinding jig (1) of claim 12, wherein the front abutment surface (6a, 6b) is formed on the first and second support leg (2a, 2b), respectively.

14. The grinding jig (1) according to any of the preceding claims, wherein the first clamp portion (10), the second clamp portion (20) and the elongate support portion (2) are separate parts that are attachable to one another.

15. The grinding jig (1) according to any of the preceding claims, wherein the first clamp portion (10) is configured to be attached to the first support leg (2a) and the second clamp portion (20) is configured to be attached to the second support leg (2b).

16. The grinding jig (1) according to any of the preceding claims, wherein the length of the support legs (2a, 2b) and the clamp portions (10, 20) along the longitudinal center axis Y corresponds to at least 70 percent of the length of the grinding jig (1).

17. A grinding system comprising a grinding machine (200) having a grinding means (210) and a support means (220), the grinding system comprising a grinding jig (1) according to any of the preceding claims

## Patentansprüche

1. Schleifvorrichtung (1) zum Halten einer Klinge (100) eines Werkzeuges in einer Schleifmaschine (200), die Schleifmaschine (200) umfassend Schleifmittel (210) und Stützmittel (220), wobei die Schleifvorrichtung (1) umfasst:
- ein erstes und ein zweites Klemmteil (10, 20), welche beweglich zu einander sind, um die Klinge (100) zu klemmen, und
- ein längliches Stützteil (2), dazu ausgelegt, die Schleifvorrichtung (1) auf dem Stützmittel (220) der Schleifmaschine (200) zu stützen, das längliche Stützteil (2) umfassend ein erstes Stützbein (2a), welches das erste Klemmteil (10) trägt, und ein zweites Stützbein (2b), welches das zweite Klemmteil (20) trägt, wobei
das längliche Stützteil (2) sich entlang einer longitudinalen Mittelachse Y der Schleifvorrichtung (1) erstreckt und eine radiale Anschlagsfläche (3) umfasst, die für den Anschlag gegen das Stützmittel (220) der Schleifmaschine (200) ausgelegt ist,
**dadurch gekennzeichnet, dass**
das erste und zweite Stützbein (2a, 2b) des Stützteils (2) an der radialen Anschlagsfläche (3) miteinander verbunden sind und die Schleifvorrichtung (1) im Wesentlichen die Form einer Pinzette hat, wobei das erste Stützbein (2a), welches das erste Klemmteil trägt (10), einen ersten Hebel der Schleifvorrichtung bildet, der die Form der Pinzette hat, und das zweite Stützbein (2b), welches das zweite Klemmteil trägt (20), einen zweiten Hebel der Schleifvorrichtung bildet, der die Form einer Pinzette hat.

2. Schleifvorrichtung (1) nach Anspruch 1, wobei das erste und zweite Stützbein (2a, 2b) dazu ausgelegt sind gebogen zu werden, sodass das erste und zweite Klemmteil (10, 20) bezogen aufeinander beweglich sind.

3. Schleifvorrichtung (1) nach Anspruch 1 oder 2, wobei die radiale Anschlagsfläche (3) an dem Drehpunkt der Schleifvorrichtung positioniert ist, die die Form einer Pinzette hat.

4. Schleifvorrichtung (1) nach einem der vorherigen Ansprüche, wobei das erste und zweite Stützbein (2a, 2b) massiv sind oder robuste Abschnitte umfassen, die massiv sind.

5. Schleifvorrichtung (1) nach einem der vorherigen Ansprüche, wobei das erste und zweite Stützbein (2a, 2b) aus einem Stück sind oder miteinander verbunden sind, z.B. durch Verkleben oder Verschrauben miteinander mindestens an der radialen Anschlagsfläche (3).

6. Schleifvorrichtung (1) nach einem der vorherigen Ansprüche, wobei das erste und zweite Stützbein (2a, 2b) aus Kunststoff hergestellt sind.

7. Schleifvorrichtung (1) nach einem der vorherigen Ansprüche, wobei die Klemmteile (10, 20) aus Metall hergestellt sind.

8. Schleifvorrichtung (1) nach einem der vorherigen Ansprüche, umfassend ein Betätigungsmittel (30), das dazu angeordnet ist, das erste und zweite Klemmteil (10, 20) lösbar gegeneinanderzudrücken, um die Klinge (100) zu klemmen.

9. Schleifvorrichtung (1) nach Anspruch 8, wobei das Betätigungsmittel (30) dazu ausgelegt ist, an das erste und zweite Klemmteil (10, 20) zu kuppeln.

10. Schleifvorrichtung (1) nach Anspruch 8 oder 9, wobei das Betätigungsmittel (30) einen Verbindungsaktor (31) und, optional, einen Trennungsaktor (35) umfasst.

11. Schleifvorrichtung (1) nach Anspruch 8 oder 9, wobei das Betätigungsmittel (30) einen Verbindungsaktor (31) und einen Trennungsaktor (35) umfasst, wobei der Trennungsaktor (35) zwischen dem Verbindungsaktor (31) und dem ersten und zweiten Stützbein (2a, 2b) positioniert ist.

12. Schleifvorrichtung (1) nach einem der vorherigen Ansprüche, wobei das längliche Stützteil (2) eine hintere radiale Anschlagsfläche (3) und eine vordere radiale Anschlagsfläche (6a, 6b) umfasst, wobei die hintere und vordere radiale Anschlagsfläche (3, 6a, 6b) voneinander beabstandet sind, sodass die Schleifvorrichtung (1) rückwärts und vorwärts beweglich ist relativ zum Stützmittel (220) in der Richtung der longitudinalen Mittelachse Y der Schleifvorrichtung (1).

13. Schleifvorrichtung (1) nach Anspruch 12, wobei die vordere Anschlagsfläche (6a, 6b) jeweils an dem ersten und zweiten Stützbein (2a, 2b) gebildet ist.

14. Schleifvorrichtung (1) nach einem der vorherigen Ansprüche, wobei das erste Klemmteil (10), das zweite Klemmteil (20) und das längliche Stützteil (2) separate Teile sind, die aneinander befestigt werden können.

15. Schleifvorrichtung (1) nach einem der vorherigen Ansprüche, wobei das erste Klemmteil (10) dazu ausgelegt ist, an dem ersten Stützbein (2a) befestigt zu werden, und das zweite Klemmteil (20) dazu ausgelegt ist, an dem zweiten Stützbein (2b) befestigt zu werden.

16. Schleifvorrichtung (1) nach einem der vorherigen Ansprüche, wobei die Länge der Stützbeine (2a, 2b) und der Klemmteile (10, 20) entlang der longitudinalen Mittelachse Y mindestens 70 Prozent der Länge der Schleifvorrichtung (1) entspricht.

17. Schleifsystem, umfassend eine Schleifmaschine (200) mit einem Schleifmittel (210) und einem Stützmittel (220), das Schleifsystem umfassend eine Schleifvorrichtung (1) nach einem der vorherigen Ansprüche.

## Revendications

1. Gabarit d'affûtage (1) pour maintenir une lame (100) d'un outil dans une machine d'affûtage (200), la machine d'affûtage (200) comprenant un moyen d'affûtage (210) et un moyen de support (220), lequel gabarit d'affûtage (1) comprend :
- une première et une seconde partie de serrage (10, 20) qui sont mobiles l'une par rapport à l'autre afin de serrer la lame (100), et
- une partie de support allongée (2) configurée pour supporter le gabarit d'affûtage (1) sur le moyen de support (220) de la machine d'affûtage (200), la partie de support allongée (2) comprenant un premier pied de support (2a) portant la première partie de serrage (10) et un second pied de support (2b) portant la seconde partie de serrage (20), lequel la partie de support allongée (2) s'étend le long d'un axe central longitudinal Y du gabarit d'affûtage (1) et comprend une surface d'appui radiale (3) configurée pour venir en appui contre le moyen de support (220) de la machine d'affûtage (200),
**caractérisé en ce que**
les premier et second pieds de support (2a, 2b) de la partie de support (2) sont fixés l'un à l'autre au niveau de la surface d'appui radiale (3) et le gabarit d'affûtage (1) ayant essentiellement la forme d'une paire de pincettes, la première pied de support (2a) portant la première partie de serrage (10) formant un premier levier du gabarit d'affûtage ayant la forme de la paire de pincettes et le second pied de support (2b) portant la seconde partie de serrage (20) formant un second levier du gabarit d'affûtage ayant la forme de la paire de pincettes.

2. Gabarit d'affûtage (1) selon la revendication 1, dans lequel les premier et second pieds de support (2a, 2b) sont configurés pour être courbés de sorte que les première et seconde parties de serrage (10, 20) soient mobiles l'une par rapport à l'autre.

3. Gabarit d'affûtage (1) selon la revendication 1 ou 2, dans lequel la surface d'appui radiale (3) est positionnée au point d'appui du gabarit d'affûtage ayant la forme d'une paire de pincettes.

4. Gabarit d'affûtage (1) selon l'une quelconque des revendications précédentes, dans lequel les premier et second pieds de support (2a, 2b) sont massifs ou comprennent des sections élastiques qui sont massives.

5. Gabarit d'affûtage (1) selon l'une quelconque des revendications précédentes, dans lequel les premier et second pieds de support (2a, 2b) sont monoblocs ou sont fixés l'un à l'autre, par exemple, en étant collés ou vissés l'un à l'autre au moins au niveau de la surface d'appui radiale (3).

6. Gabarit d'affûtage (1) selon l'une quelconque des revendications précédentes, dans lequel les premier et second pieds de support (2a, 2b) sont réalisés en matériau plastique.

7. Gabarit d'affûtage (1) selon l'une quelconque des revendications précédentes, dans lequel les parties de serrage (10, 20) sont réalisées en métal.

8. Gabarit d'affûtage (1) selon l'une quelconque des revendications précédentes, comprenant un moyen d'actionnement (30) disposé pour forcer de manière amovible les première et seconde parties de serrage (10, 20) l'une vers l'autre afin de serrer la lame (100).

9. Gabarit d'affûtage (1) selon la revendication 8,
dans lequel le moyen d'actionnement (30) est configuré pour engager les première et seconde parties de serrage (10, 20).

10. Gabarit d'affûtage (1) selon la revendication 8 ou 9, dans lequel le moyen d'actionnement (30) comprend un actionneur de rapprochement (31) et, éventuellement, un actionneur d'écartement (35).

11. Gabarit d'affûtage (1) selon la revendication 8 ou 9, dans lequel le moyen d'actionnement (30) comprend un actionneur de rapprochement (31) et un actionneur d'écartement (35) et dans lequel l'actionneur d'écartement (35) est positionné entre l'actionneur de rapprochement (31) et les premier et second pieds de support (2a, 2b).

12. Gabarit d'affûtage (1) selon l'une quelconque des revendications précédentes, dans lequel la partie de support allongée (2) comprend une surface d'appui radiale arrière (3) et une surface d'appui radiale avant (6a, 6b), dans lequel les surfaces d'appui radiale arrière et avant (3, 6a, 6b) sont espacées de sorte que le gabarit d'affûtage (1) soit mobile d'avant en arrière par rapport au moyen de support (220) dans la direction de l'axe central longitudinal Y du gabarit d'affûtage (1).

13. Gabarit d'affûtage (1) selon la revendication 12,
dans lequel la surface d'appui avant (6a, 6b) est formée respectivement sur le premier et le second pied de support (2a, 2b).

14. Gabarit d'affûtage (1) selon l'une quelconque des revendications précédentes, dans lequel la première partie de serrage (10), la seconde partie de serrage (20) et la partie de support allongée (2) sont des pièces distinctes aptes à être fixées l'une à l'autre.

15. Gabarit d'affûtage (1) selon l'une quelconque des revendications précédentes, dans lequel la première partie de serrage (10) est configurée pour être fixée au premier pied de support (2a) et la seconde partie de serrage (20) est configurée pour être fixée au second pied de support (2b).

16. Gabarit d'affûtage (1) selon l'une quelconque des revendications précédentes, dans lequel la longueur des pieds de support (2a, 2b) et des parties de serrage (10, 20) le long de l'axe central longitudinal Y correspond à au moins 70 pour cent de la longueur du gabarit d'affûtage (1).

17. Système d'affûtage comprenant une machine d'affûtage (200) ayant un moyen d'affûtage (210) et un moyen de support (220), le système d'affûtage comprenant un gabarit d'affûtage (1) selon l'une quelconque des revendications précédentes.
